(19) Europäisches Patentamt
European Patent Office
Office européen des brevets

(11) Veröffentlichungsnummer: **0 275 035**
**A2**

(12) # EUROPÄISCHE PATENTANMELDUNG

(21) Anmeldenummer: **88100147.3**

(51) Int. Cl.4: **C08G 65/40**

(22) Anmeldetag: **08.01.88**

(30) Priorität: **14.01.87 DE 3700808**

(43) Veröffentlichungstag der Anmeldung:
**20.07.88 Patentblatt 88/29**

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Heinz, Gerhard, Dr.**
**Im Vogelsang 2**
**D-6719 Weisenheim(DE)**
Erfinder: **Koch, Juergen, Dr.**
**Woogstrasse 36**
**D-6708 Neuhofen(DE)**
Erfinder: **Eggersdorfer, Manfred, Dr.**
**Hannongstrasse 18**
**D-6710 Frankenthal(DE)**
Erfinder: **Henkelmann, Jochem, Dr.**
**Ludwigshafener Strasse 44**
**D-6704 Mutterstadt(DE)**

(54) **Verfahren zur Herstellung von Polyaryletherketonen.**

(57) Verfahren zur Herstellung von Polyaryletherketonen durch Umsetzung von aromatischen Dihydroxyverbindungen mit aromatischen Dihalogenverbindungen in polaren aprotischen Lösungsmitteln in Gegenwart von Alkalimetallcarbonaten, wobei aromatische Dihydroxyverbindungen I

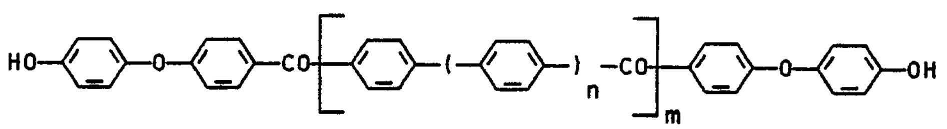

(I)

oder deren kernsubstituierte $C_1$-$C_8$-Alkyl, $C_1$-$C_8$-Alkoxy-, Aryl-, Chlor-oder Fluorderivate, wobei n und m den Wert 0 oder 1 haben, mit aromatischen Dihalogenverbindungen

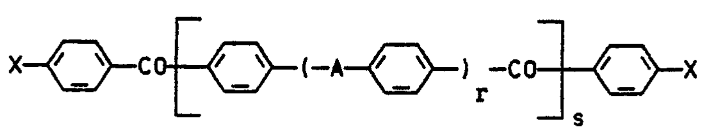

(II)

oder deren kernsubstituierten $C_1$-$C_8$-Alkyl-, $C_1$-$C_8$-Alkoxy-, Aryl-, Chlor-oder Fluorderivaten, wobei r und s jeweils den Wert 0 oder 1 haben, A ein Sauerstoffatom oder eine chemische Bindung und X Chlor oder Fluor ist, umgesetzt werden.

EP 0 275 035 A2

Xerox Copy Centre

## Verfahren zur Herstellung von Polyaryletherketonen

Die Erfindung betrifft ein Verfahren zur Herstellung von Polyaryletherketonen durch Umsetzung von aromatischen Dihydroxyverbindungen mit aromatischen Dihalogenverbindungen in polaren aprotischen Lösungsmitteln in Gegenwart von Alkalimetallcarbonaten.

Bevorzugte Ausführungsformen des erfindungsgemäßen Verfahren sind den Unteransprüchen zu entnehmen.

Aus der EP-A-1 879 ist ein Verfahren zur Herstellung von Polyaryletherketonen mit wiederkehrenden Einheiten

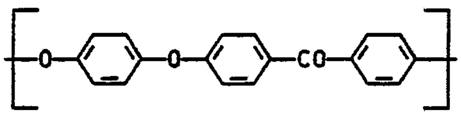

durch Umsetzung von Hydrochinon mit 4,4'-Difluorbenzophenon bekannt. Dieses Verfahren hat den Nachteil, daß große Mengen des teuren Monomeren 4,4'-Difluorbenzophenon benötigt werden.

Aufgabe der vorliegenden Erfindung war es daher, ein Verfahren zur Herstellung von Polyaryletherketonen zur Verfügung zu stellen, welches eine kostengünstigere Herstellung von Polyaryletherketonen ermöglicht, ohne daß eine Verschlechterung der Eigenschaften der Produkte in Kauf genommen werden muß. Darüber hinaus sollte auch die erforderliche Menge an Fluor-enthaltenden Monomeren im Verfahren ganz allgemein reduziert werden.

Diese Aufgabe wird erfindungsgemäß durch ein Verfahren der eingangs definierten Art gelöst, welches dadurch gekennzeichnet ist, daß man aromatische Dihydroxyverbindungen der allgemeinen Formel I

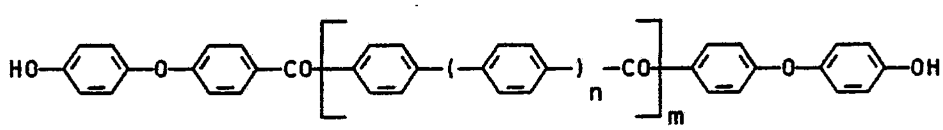 (I)

oder deren kernsubstituierte $C_1$-$C_8$-Alkyl-, $C_1$-$C_8$-Alkoxy-, Aryl-, Chlor-oder Fluorderivate, wobei n und m den Wert 0 oder 1 haben, mit aromatischen Dihalogenverbindungen der allgemeinen Formel II

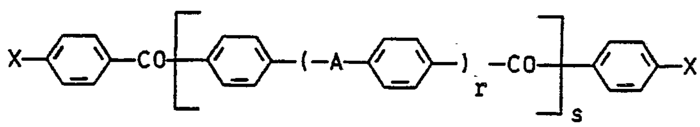 (II)

oder deren kernsubstituierten $C_1$-$C_8$-Alkyl-, $C_1$-$C_8$-Alkoxy-, Aryl-, Chlor-oder Fluorderivaten, wobei r und s jeweils den Wert 0 oder 1 haben, A ein Sauerstoffatom oder eine chemische Bindung und X Chlor-oder Fluor ist, umsetzt.

Ein Vorteil des erfindungsgemäßen Verfahrens gegenüber dem z.B. aus der EP-A-1 879 bekannten Verfahren liegt darin, daß durch die Verwendung der Dihydroxyverbindungen der allgemeinen Formel I, die im Vergleich zu den üblicherweise eingesetzten Monomeren höhere Molekulargewichte aufweisen, der Anteil an Dihalogenverbindungen, insbesondere Difluorverbindungen gesenkt werden kann. Dies sei durch folgendes Beispiel verdeutlicht, welches die Herstellung von PEEK (Poly(etheretherketon)) betrifft:

herkömmliches Verfahren:

| | | | |
|---|---|---|---|
| Hydrochinon | + 4,4'-Difluorbenzophenon | → | Produkt |
| 1 mol (110 g) | 1 mol (218 g) | | 288 g |

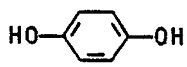

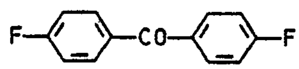

erfindungsgemäßes Verfahren:

| | | | |
|---|---|---|---|
| 4,4'-Di(4-hydroxyphenoxy)-benzophenon | + 4,4'-Difluorbenzophenon | → | Produkt |
| 1 mol (398 g) | 1 mol (218 g) | | 576 g |

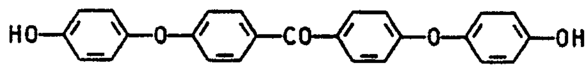

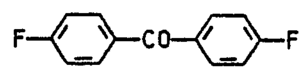

Dies zeigt, daß beim erfindungsgemäßen Verfahren bei Einsatz der gleichen Menge 4,4'-Difluorbenzophenon durch die Verwendung der Dihydroxyverbindungen der allgemeinen Formel I die doppelte Menge Produkt erzeugt werden kann als beim herkömmlichen Verfahren. Entsprechende Berechnungen lassen sich auch für andere an sich bekannte Polyaryletherketone aufstellen, z.B. für die Herstellung von PEEKK (E steht für Etherbrücken, K für Ketobrücken im Polymer).

Unter die allgemeine Formel I fallen die Verbindungen

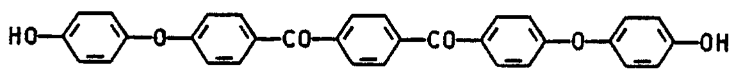

(Ia)

1,4-Di-[4-(4-hydroxyphenoxy)benzoyl]benzol (m = 1, n = 0)

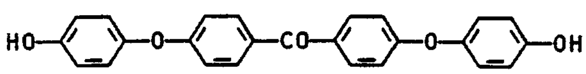

(Ib)

4,4'-Di(4-hydroxyphenoxy)benzophenon (m = 0, n = 0) und

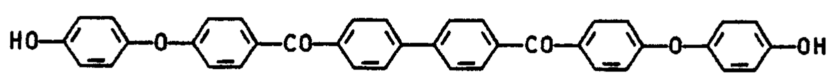

(Ic)

4,4'-Di[4-(4-hydroxyphenoxy)benzoyl]diphenyl (m = 1, n = 1)

sowie deren kernsubstituierte $C_1$-$C_8$-Alkyl-, $C_1$-$C_8$-Alkoxy-, Aryl-, Chlor-oder Fluorderivate. Beispielhaft seien als Substituenten Methyl-, Ethyl-, n-, i-und t-Butyl, die entsprechenden Alkoxygruppen sowie Phenylgruppen genannt. In der Regel werden jedoch die unsubstituierten Verbindungen Ia-Ic bevorzugt verwendet.

Ia kann beispielsweise durch Umsetzung von 1,4-Di(4-chlorbenzoyl)benzol mit einem Alkalimetallsalz des Hydrochinon-mono-t-butylethers und anschließende Spaltung des t-Butylethers nach folgendem Reaktionsschema hergestellt werden:

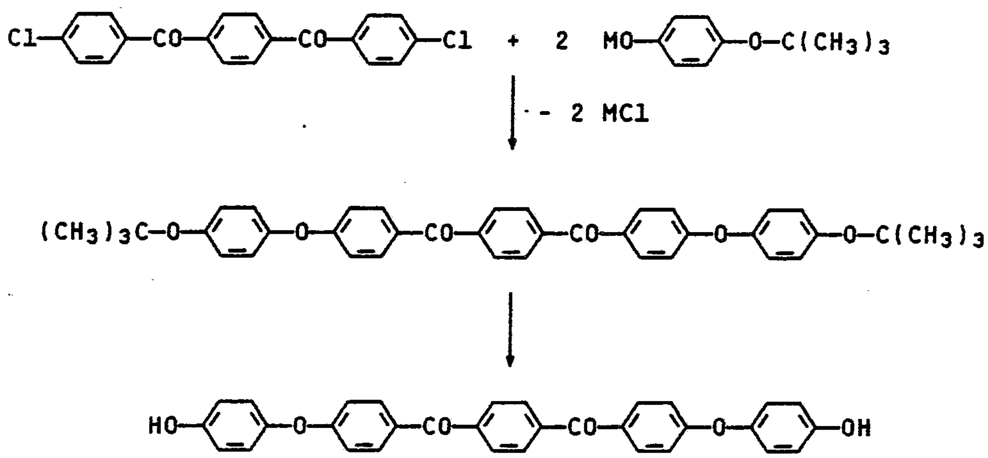


Die Verbindungen Ib und Ic sind auf analogem Weg erhältlich, wenn anstatt 1,4-Di-(4-chlorbenzoyl)-benzol 4,4'-Dichlorbenzophenon bzw. 4,4'-Di(4-chlorbenzoyl)diphenyl eingesetzt wird.

Die Bedingungen, unter denen solche Umsetzungen durchgeführt werden, sind allgemein bekannt, so daß sich hier nähere Angaben erübrigen.

Als aromatische Dihalogenverbindungen II werden im erfindungsgemäßen Verfahren bevorzugt die Fluorverbindungen

4,4'-Difluorbenzophenon

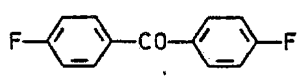

IIa

1,4-Di-(4-fluorbenzoyl)benzol

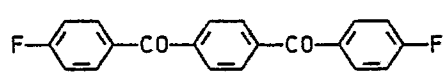

IIb

4,4'-Di-(4-fluorbenzoyl)diphenylether

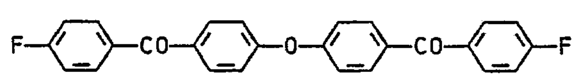

IIc

und

1,10-Di(4-fluorbenzoyl)diphenyl

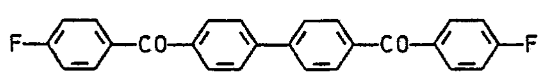

IId

eingesetzt. Prinzipiell können zwar auch die Chlorverbindungen oder sowohl Chlor-als auch Fluor-enthaltende Verbindungen eingesetzt werden, doch werden die Fluorverbindungen bevorzugt. Bezüglich bevorzugter Substituenten am aromatischen Ring sei hier auf die entsprechenden Ausführungen zu den Dihydroxyverbindungen verwiesen. Wie dort werden die unsubstituierten Verbindungen IIa bis IIc bevorzugt.

Stellt man die nach dem erfindungsgemäßen Verfahren durch Umsetzung der unsubstituierten Verbindungen der allgemeinen Formeln I und II erhältlichen Produkte in einem Schema zusammen, so ergibt sich folgendes Bild:

| Ausgangsverbindungen | Produkt |
|---|---|
| Ia + IIa | PEEKKEEK |
| Ia + IIb | PEEKK |
| Ia + IIc | PEEKKEEKEK |
| Ia + IId | PEEKKEEK-K* |
| Ib + IIa | PEEK |
| Ib + IIb | PEEKEEKK |
| Ib + IIc | PEEKEEKEK |
| Ib + IId | PEEKEEK-K* |
| Ic + IIa | PEEK-KEEK* |
| Ic + IIb | PEEK-KEEKK* |
| Ic + IIc | PEEK-KEEKEK* |
| Ic + IId | PEEK-KEEK-K* |

Die Bezeichnung der Produkte erfolgt nach der üblichen Nomenklatur, in der E für eine Etherbrücke zwischen zwei aromatischen Ringen und K für eine -CO-Brücke steht.

**Beispiel:** PEEKKEEK (Ia + IIa)

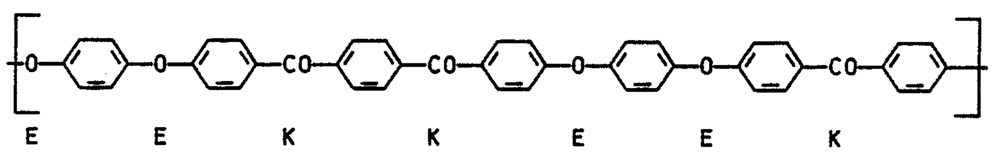

In den mit * gekennzeichneten Produkten deutet der Bindestrich an, daß sich zwischen den entsprechenden Brücken ein Diphenylrest befindet.

Das erfindungsgemäße Verfahren wird in polaren aprotischen Lösungsmitteln in Gegenwart von Alkalimetallcarbonaten als Basen durchgeführt. Die Verfahrensbedingungen wie Temperaturen, Druck, Lösungsmittel und evtl. Zusätze (Katalysatoren) sind die gleichen, wie sie z.B. in der EP-A-1879 beschrieben sind. Demzufolge eignen sich Lösungsmittel der Formel

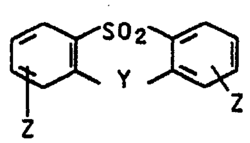

wobei
Y eine chemische Bindung, ein Sauerstoffatom oder zwei an die aromatischen Reste gebundene Wasserstoffatome, und
Z und Z' Wasserstoff-oder Phenylgruppen sind.

Eine besonders bevorzugte Verfahrensvariante ist die Umsetzung in Diphenylsulfon als Lösungsmittel in Gegenwart von wasserfreiem Kaliumcarbonat als Base.

Die Menge an Diphenylsulfon beträgt im allgemeinen 5 bis 100 mol, vorzugsweise 5 bis 20 mol, bezogen auf 1 mol Monomere. Dies ergibt einen bevorzugten Feststoffgehalt der Lösung im Bereich von 5 bis 50 Gew.%, besonders bevorzugt von 10 bis 40 Gew.%.

Zur Einstellung und Steuerung des gewünschten Molekuargewichts können gegebenenfalls aktivierte Monohalogen-und/oder Mononitroverbindungen, z.B.

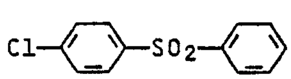 , 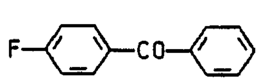 und 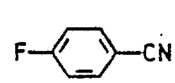

oder auch entsprechende Monohydroxyverbindungen eingesetzt werden.

Das bei der Polykondensation entstehende Wasser kann mit Hilfe eines Azeotropbildners, Anlegen eines Unterdrucks oder vorzugsweise durch Einleiten eines Stickstoffstroms und Abdestillation entfernt werden.

Als Azeotropbildner eignen sich alle Verbindungen, die bei Normaldruck im Bereich der Reaktionstemperatur sieden und die sich mit dem Reaktionsgemisch homogen mischen lassen, ohne chemische Reaktionen einzugehen.

Die Reaktionstemperatur liegt im allgemeinen im Bereich von 150 bis 400°C, vorzugsweise 250 bis 350°C, wobei die untere Temperaturgrenze durch die Löslichkeit des entstehenden Produkts im Lösungsmittel-System festgelegt wird; die Gesamtreaktionsdauer richtet sich nach dem gewünschten Kondensationsgrad, liegt aber im allgemeinen im Bereich von 0,5 bis 15 Stunden.

Im Anschluß an die Polykondensation können zur Stabilisierung freie Phenolat-Endgruppen mit einem Aryl-oder Alkylierungsmittel, z.B. Methylchlorid, umgesetzt werden. Dies erfolgt vorzugsweise bei Temperaturen bis zu 350°C, wobei die untere Temperaturgrenze durch die Löslichkeit der Reaktionsprodukte im verwendeten Lösungsmittel abhängt.

Die Aufarbeitung der Reaktionsprodukte kann nach üblichen, an sich bekannten Verfahren erfolgen. Vorteilhaft wird aus der Schmelze ein feinteiliges Gut erzeugt, das durch Extraktion mit geeigneten Lösungsmitteln, z.B. Aceton, vom verwendeten hochsiedenden Lösungsmittel befreit wird. Anschließend können Reste von Alkalimetallcarbonat und Alkalimetallhalogenide durch Waschen mit Wasser entfernt werden.

Durch entsprechende Variation bei Verwendung mehrerer Dihydroxy-oder Dihalogenverbindungen lassen sich nach dem erfindungsgemäßen Verfahren auch Copolykondensate (Copolyaryletherketone) herstellen.

Einen statistischen Aubau erhöht man durch gleichzeitige Zugabe aller Monomeren, während bei zeitlich aufeinanderfolgender Zugabe verschiedener Dihydroxy-oder Dihalogenverbindungen Blockcopolykondensate entstehen. Daneben ist es auch möglich, nach dem erfindungsgemäßen Verfahren hergestellte Blöcke zu Produkten mit höherem Molekulargewicht zu verknüpfen.

Das Molekulargewicht (Gewichtsmittelwert) der nach dem erfindungsgemäßen Verfahren erhaltenen Polyaryletherketone liegt im allgemeinen im Bereich von 10 000 bis 150 000, vorzugsweise von 15 000 bis 100 000 und insbesondere von 18 000 bis 80 000.

Falls die wiederkehrenden Einheiten blockweise angeordnet sind, liegt das Molekulargewicht der einzelnen Blöcke im allgemeinen im Bereich von 500 bis 15 000, insbesondere von 1500 bis 10 000.

Die erhaltenen Polyaryletherketone können mit Füllstoffen, Pigmenten und anderen Verarbeitungshilfsmitteln abgemischt werden.

Als verstärkend wirkende Füllstoffe seien beispielsweise Asbest, Kohlefasern und vorzugsweise Glasfasern genannt, wobei die Glasfasern z.B. in Form von Glasgeweben, - matten, -vliesen und/oder vorzugsweise Glasseidenrovings oder geschnittener Glasseide aus alkaliarmen E-Glasen mit einem Durchmesser von 5 bis 20 µm, vorzugsweise 8 bis 15 µm, zur Anwendung gelangen, die nach ihrer Einarbeitung eine mittlere Länge von 0,05 bis 1 mm, vorzugsweise 0,1 bis 0,5 mm, aufweisen. Die mit Glasseidenrovings oder geschnittener Glasseide verstärkten Polyaryletherketone enthalten zwischen 10 und 60 Gew.%, vorzugsweise 20 bis 50 Gew.%, des Verstärkungsmittels, bezogen auf das Gesamtgewicht, während die imprägnierten Glasgewebe, -matten und/oder -vliese zwischen 10 und 80 Gew.% vorzugsweise zwischen 30 und 60 Gew.% Copolymerisate, bezogen auf das Gesamtgewicht, enthalten. Als Pigmente eignen sich beispielsweise Titandioxid, Cadmium-, Zinksulfid, Bariumsulfat und Ruß. Als andere Zusatz-und Hilfsstoffe kommen beispielsweise in Betracht Farbstoffe, Schmierstoffe, wie z.B. Polytetrafluorethylen, Graphit oder Molybdändisulfid, Schleifmittel, wie z.B. Carborund, Lichtstabilisatoren und Hydrolyseschutzmittel. Auch Wollastonit, Calciumcarbonat, Glaskugeln, Quarzmehl, S und Bornitrid oder Mischungen dieser Füllstoffe sind verwendbar. Die Pigmente, Zusatz-und Hilfsstoffe werden üblicherweise in Mengen von 0,01 bis 10 Gew.%, bezogen auf das Gewicht an Polyaryletherketonen, eingesetzt.

Beispiel 1 (Vergleich)

109,1 g (0,5 Mol) 4,4'-Difluorbenzophenon, 76,02 g (0,55 Mol) fein gemahlenes Kaliumcarbonat und 1000 g Diphenylsulfon wurden in einen Dreihalskolben mit Rührer, Stickstoffeinlaß und Luftkühler gefüllt. Unter einer Stickstoffatmosphäre wurden die Einsatzstoffe auf ca. 180°C erhitzt, wobei das Diphenylsulfon - schmolz und das Kaliumcarbonat fein suspendiert wurde. Dann wurden 55,06 g (0,5 Mol) Hydrochinon zugegeben, die Temperatur auf 200°C erhöht und 2 Stunden gehalten. Dann wurde die Temperatur je 1

Stunde bei 240°C, 280°C und 320°C gehalten.

Nach dem Erkalten und Verfestigen der Reaktionsmasse wurde diese gemahlen. Das so erhaltene feine Pulver wurde viermal 10 Minuten mit heißem Aceton, dreimal 10 Minuten mit kochendem Wasser und nochmals 5 Minuten mit Aceton gewaschen, um Diphenylsulfon und anorganische Bestandteile zu entfernen. Das erhaltene Polymerpulver wurde bei 150°C 10 Stunden im Vakuum getrocknet.

Das Polymer, das aus wiederkehrenden Einheiten der Formel

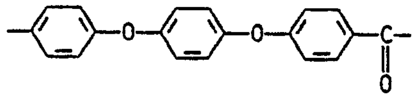

aufgebaut war, wies nach DSC-Messungen eine Glastemperatur von 141°C und eine Schmelztemperatur von 339°C auf.

Die reduzierte Viskosität betrug 1,80 (gemessen in konzentrierter Schwefelsäure bei 25°C, 1 g Polymer in 100 ml).

Beispiel 2

99,6 g (0,25 Mol) 4,4'-Di(4-hydroxyphenoxy)benzophenon, 54,55 g (0,25 Mol) 4,4'-Difluorbenzophenon, 38,0 g (0,275 Mol) Kaliumcarbonat und 1000 g Diphenylsulfon wurden in einem Vierhals-Glaskolben mit Rührer, Stickstoffeinlaß, Innenthermometer und Luftkühler gefüllt und auf 200°C erhitzt und 1 Stunde bei dieser Temperatur gehalten. Dann wurde die Reaktionsmasse noch je eine Stunde bei 240°C, 280°C und 320°C gehalten. Nach dem Erkalten wurde die Reaktionsmasse zerkleinert und wie in Beispiel 1 beschrieben, aufgearbeitet.

Die Eigenschaften des so erhaltenen Polymeren sind in Tabelle 1 wiedergegeben.

Beispiel 3

125,63 g (0,25 Mol) 1,4-Di[4-(4-hydroxyphenoxy)benzoyl]benzol, 80,56 g (0,25 Mol) 1,4-Di(4-fluorbenzoyl)benzol und 38,0 g (0,275 Mol) Kaliumcarbonat wurden in 1200 g Diphenylsulfon unter den in Beispiel 2 beschriebenen Bedingungen umgesetzt und aufgearbeitet. Die Eigenschaften des so erhaltenen Polymeren sind in der Tabelle wiedergegeben.

Beispiel 4

125,63 g (0,25 Mol) 1,4-Di[4(4-hydroxyphenoxy)benzoyl]benzol, 54,55 g (0,25 Mol) 4,4-Difluorbenzophenon und 38,0 g (0,275 Mol) Kaliumcarbonat wurden in 1200 g Diphenylsulfon unter den in Beispiel 2 beschriebenen Bedingungen umgesetzt und aufgearbeitet. Die Eigenschaften des erhaltenen Polymeren sind in der Tabelle wiedergegeben.

Beispiel 5

144,66 g (0,25 Mol) 4,4'-Di[4-hydroxyphenoxy)benzoyl]diphenyl, 80,56 g (0,25 Mol) 1,4-Di(4-fluorbenzoyl)benzol und 38,0 g (0,275 Mol) Kaliumcarbonat wurden in 1200 g Diphenylsulfon unter den in Beispiel 2 beschriebenen Bedingungen umgesetzt und aufgearbeitet. Die Eigenschaften des erhaltenen Polymeren sind in der Tabelle wiedergegeben.

Tabelle

| Beispiel | Struktur des erhaltenen Polymeren | Tg in °C | Tm in °C | Red. Viskos. |
|---|---|---|---|---|
| 2 | PEEK | 140 | 340 | 2,23 |
| 3 | PEEKK | 163 | 360 | 1,85 |
| 4 | PEEKEEKK | 153 | 351 | 1,92 |
| 5 | PEEK-KEEKK* | 178 | 395 | 1,83 |

* Der Bindestrich deutet an, daß sich zwischen den beiden Keto-Gruppen eine Biphenyl-Einheit befindet.

## Ansprüche

1. Verfahren zur Herstellung von Polyaryletherketonen durch Umsetzung von aromatischen Dihydroxyverbindungen mit aromatischen Dihalogenverbindungen in polaren aprotischen Lösungsmitteln in Gegenwart von Alkalimetallcarbonaten, dadurch gekennzeichnet, daß man aromatische Dihydroxyverbindungen der allgemeinen Formel I

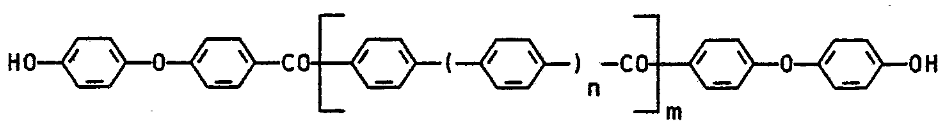

(I)

oder deren kernsubstituierte $C_1$-$C_8$-Alkyl, $C_1$-$C_8$-Alkoxy-, Aryl-, Chlor-oder Fluorderivate, wobei n und m den Wert 0 oder 1 haben, mit aromatischen Dihalogenverbindungen der allgemeinen Formel II

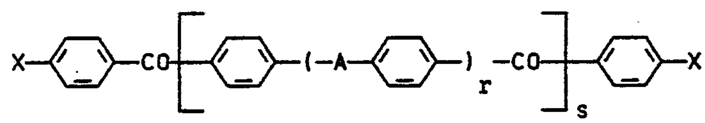

(II)

oder deren kernsubstituierten $C_1$-$C_8$-Alkyl-, $C_1$-$C_8$-Alkoxy-, Aryl-, Chlor-oder Fluorderivaten, wobei r und s jeweils den Wert 0 oder 1 haben, A ein Sauerstoffatom oder eine chemische Bindung und X Chlor oder Fluor ist, umsetzt.

2.Verfahren nach Anspruch 1, dadurch gekennzeichnet, daß man als polares aprotisches Lösungsmittel Diphenylsulfon verwendet.

3. Verfahren nach den Ansprüchen 1 und 2, dadurch gekennzeichnet, daß man als Alkalimetallcarbonat Kaliumcarbonat verwendet.